# EUROPÄISCHE PATENTSCHRIFT

(11) **EP 1 154 617 B1**
(45) Veröffentlichungstag und Bekanntmachung des Hinweises auf die Patenterteilung: **20.07.2005**
(21) Anmeldenummer: 01110680.4
(22) Anmeldetag: 02.05.2001
(51) Int. Cl.: H04M 1/03, H04M 1/18

(54) **Mobiltelefon mit einem eingebauten Mikrofon**
Mobile telephone with an embedded microphone
Téléphone mobile muni d'un microphone encastré

(30) Priorität: 10.05.2000 DE 10022705
(43) Veröffentlichungstag der Anmeldung: 14.11.2001
(73) Patentinhaber: SIEMENS AKTIENGESELLSCHAFT, 80333 München (DE)
(72) Erfinder: Beeker, Udo, 46509 Xanten (DE); Mähringer, Claus, 47506 Neukirchen-Vluyn (DE)

(56) Entgegenhaltungen:
- EP-A- 0 317 167
- EP-A- 0 453 061
- EP-A- 0 866 637
- DE-A- 19 838 391
- JP-A- 11 355 411

## Beschreibung

Die vorliegende Erfindunge betrifft ein Mobiltelefon mit einem eingebauten Mikrofon, wobei der Schalleintritt durch eine Öffnung im Gehäuse erfolgt.

Moderne Mobiltelefone werden nicht nur im Büro, im Auto und auf der Strasse, sondern in zunehmendem Maße auch während unterschiedlichster Freizeitaktivitäten benutzt, bei denen die Gefahr besteht, dass Festkörper, Staub und Feuchtigkeit in die Geräte eindringen können.

Ziel der Mobiltelefon-Entwicklung ist es daher, Mobiltelefone zu entwickeln, welche einer IP-Schutzklasse zugeordnet werden können. Die IP(= International Protection)-Schutzklasse klassifiziert die Systeme entsprechend ihres Schutzgrades gegen das Eindringen von Festkörpern, Staub und Feuchtigkeit. Die IP-Bezeichnung besteht aus zwei Ziffern, wobei die erste Ziffer den Schutzgrad gegen Staub und die zweite Ziffer den Schutzgrad gegen Feuchtigkeit angibt. Die erste Ziffer kann von 0 bis 6 und die zweite Ziffer von 0 bis 8 variieren. Dabei entspricht die Ziffer 0 keinem Schutzgrad. Zum Beispiel bedeutet eine 5 als erste Ziffer, dass das Gerät gegen Staub geschützt ist, und eine 6 als erste Ziffer bedeutet, dass das Gerät vollkommen staubdicht ist. Eine 4 als zweite Ziffer besagt, dass das Gerät gegen Spritzwasser geschützt ist, während zum Beispiel eine 5 als zweite Ziffer aussagt, dass das Gerät gegen einen Wasserstrahl geschützt ist.

Dokument EP 0 453 061 offenbart eine Vorrichtung für ein mobiles telephon mit eingebauten Mikrofon, ein zylindrisches Gehäuse und ein Gummiverschluß zur akustischen Isolierung enthaltend, wobei die Isolierung zwischen dem Mikrofon und der Gehäusewand eingebracht ist.

Um bei dem eingangs genannten Mobiltelefon einen bestimmten Schutzgrad zu erreichen, zum Beispiel einen Spritzwasserschutz, muss das eingebauten Mikrofon entsprechend geschützt werden.

Diese Aufgabe wird erfindungsgemäß für das eingangs genannte Mobiltelefon dadurch gelöst, dass dass die Schalleintrittslöcher im Bodenbereich einer im Wesentlichen zylinderförmigen Mikrofonaufnahmekammer enden, dass innerhalb der Mikrofonaufnahmekammer auf dem Boden vor den Schalleintrittslöchern eine halbkreisförmige Umlenkbarriere vorgesehen ist, und dass das Mikrofon oberhalb der Umlenkbarriere angeordnet ist, wobei sich die Schalleintrittsöffnung des Mikrofons auf der den Schalleintrittsöffnungen abgewandten Seite der Umlenkbarriere befindet, und wobei zwischen dem Mikrofon und der Wand der Mikrofonaufnahmekammer eine Gummidichtung angeordnet ist.

Bei dem erfindungsgemäßen Mobiltelefon ist der direkte Weg zur Mikrofonöffnung versperrt. Durch die Umlenkbarriere wird das eindringende Spritzwasser umgelenkt und verliert Energie.

Weitere zweckmäßige Weiterbildungen und Ausgestaltungen der Erfindung ergeben sich aus den Unteransprüchen, sowie aus der nachfolgenden Beschreibung eines Ausführungsbeispiels anhand der Zeichnung.

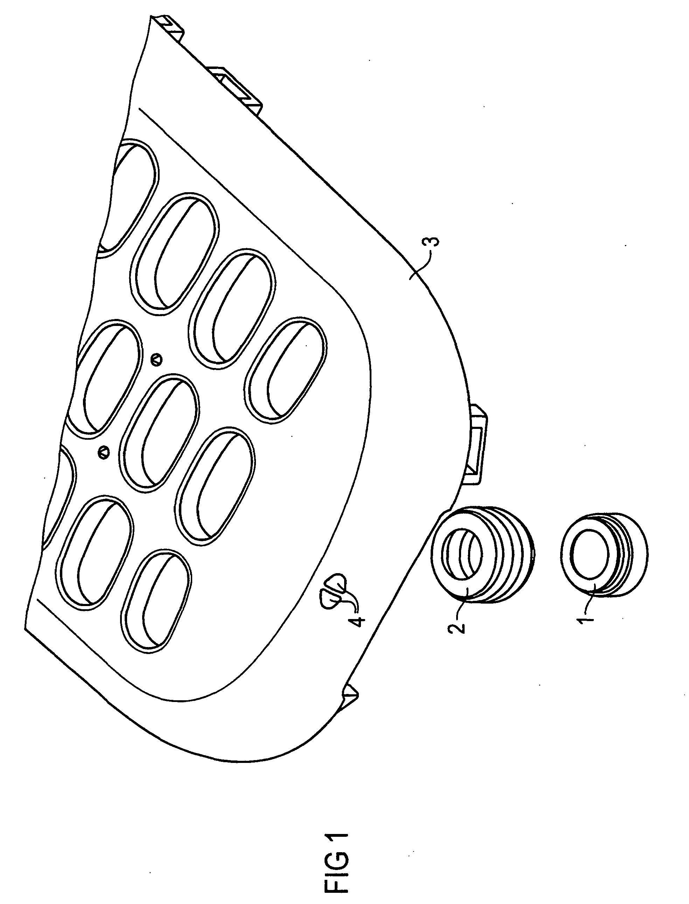

Es zeigen
- Figur 1: eine perspektivische Explosionsdarstellung von oben auf eine Gehäuseschale mit Teilen des erfindungsgemäßen Mobiltelefons,

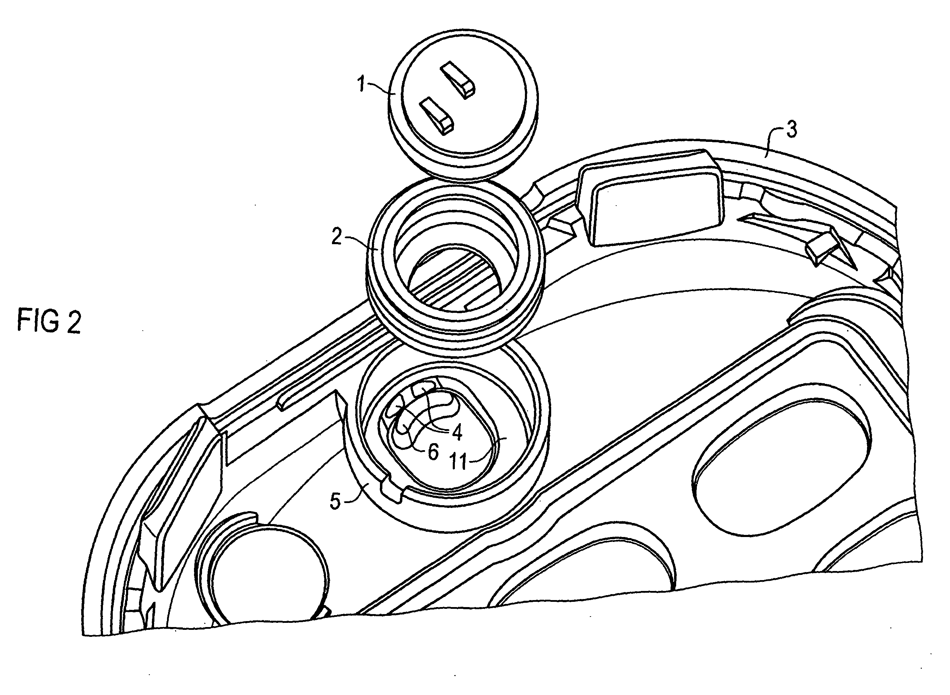

- Figur 2: eine perspektivische Explosionsdarstellung von unten, welche die erfindungswesentlichen Teile des Mobiltelefons gemäß der vorliegenden Erfindung darstellt,

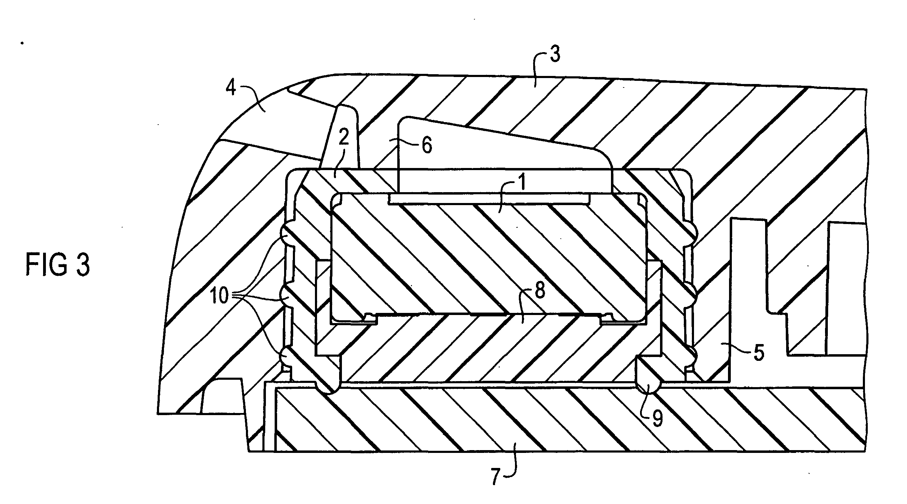

- Figur 3: einen Querschnitt durch den Einbaubereich des Mikrofons und

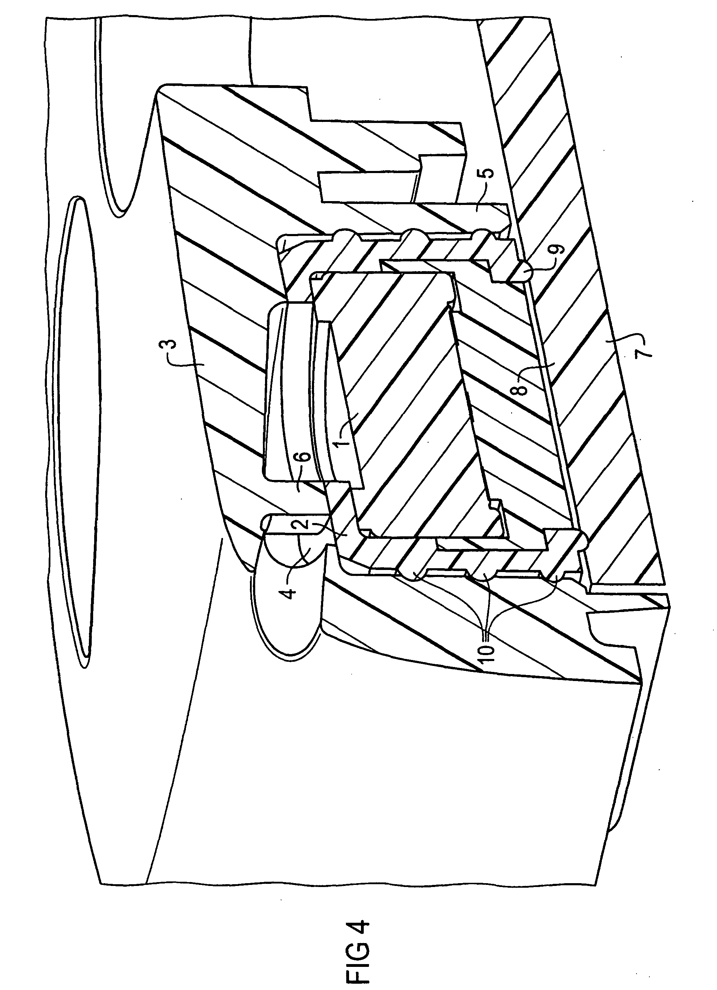

- Figur 4: eine perspektivische, teilweise geschnittene Darstellung des Einbaubereichs des Mikrofons.

Bei dem erfindungsgemäßen Mobiltelefon ist das Mikrofon 1 in der Oberschale 3 eines aus Ober- und Unterschale bestehenden Mobiltelefons untergebracht. Es sind nur die zum Verständnis der Erfindung notwendigen Bereiche des Mobiltelefons gezeigt.

Mit der Oberschale 3 bildet eine im Wesentlichen zylinderförmige Mikrofonaufnahme 5 eine Einheit. Von dieser zylinderförmigen Mikrofonaufnahme 5 führen im Bodenbereich der Mikrofonaufnahme 5 Schalleintrittsöffnungen 4 zur Aussenseite der Oberschale 3. Der Bodenbereich der Mikrofonaufnahme 5 ist derart ausgestaltet, dass der Bodenbereich, welcher im Bereich der Schalleintrittsöffnung 4 liegt, gegenüber dem übrigen Bereich der Mikrofonaufnahme 5 einen kleineren Durchmesser aufweist, so dass sich eine umlaufende Auflagekante 11 ergibt. Innerhalb des kleineren Bodenbereichs ist eine kreisbogenförmige Umlenkbarriere 6 vor den Ausgängen der Schalleintrittsöffnungen 4 angeordnet, die so ausgebildet ist, dass ihre Länge die Schalleintrittsöffnungen 4 abdeckt und deren Oberseite in einer Ebene mit der Auflagekante 11 liegt.

In die Schalleintrittsöffnung 4 wird eine Gummidichtung 2 eingeschoben, welche mit Dichtlippen 9 und 10 für einen seitlichen Abschluss, sowie für einen Abschluss zur Leiterplatte 7 hin, mit welcher das Mikrofon 1 über ein Distanzstück 8 kontaktiert, schafft. Bei den Dichtlippen 8 und 9 handelt es sich um umlaufende Dichtlippen mit einem im Wesentlichen halbkeisförmigen Querschnitt.

In die Gummidichtung 2 ist das Mikrofon 1 mit dem Distanzstück 8 vorher eingebracht worden.

Im eingebauten Zustand des Mikrofons 1 liegt die Mikrofonöffnung über dem Bodenbreich der Mikrofonaufnahme 5 hinter der Umlenkbarriere 6.

Das heisst, bei der erfindungsgemäßen Mikrofonanordnung ist der direkte Weg zur Mikrofonöffnung versperrt. Durch die Umlenkbarriere 6 wird eindringendes Tropf- bzw. Spritzwasser umgelenkt und verliert hierdurch Energie. Dadurch ist das Tropf- bzw. Spritzwasser nicht mehr in der Lage, ein Flies, das sich vor der Mikrofonöffnung befindet, zu durchdringen. Weiterhin können Fremdkörper nicht auf direktem Weg zum Mikrofon 1 gelangen.

In den Bodenbereich eindringendes Wasser bzw. in den Bodenbereich der Mikrofonaufnahme 5 eindringende Fremdkörper werden durch die Gummidichtung 2 mit ihren Dichtlippen daran gehindert, in das Innere des Mobiltelefons zu gelangen.

## Patentansprüche

1. Mobiltelefon mit einem eingebauten Mikrofon, bei welchem der Schallteintritt durch Löcher in der Gehäusewand des Mobiltelefons erfolgt,
bei welchen zusätzlich die Schalleintrittslöcher (4) im Bodenbereich einer im Wesentlichen zylinderförmigen Mikrofonaufnahmekammer (5) enden,
**dadurch gekennzeichnet,**
**dass** innerhalb der Mikrofonaufnahmekammer (5) auf dem Boden vor den Schalleintrittslöchern (4) eine halbkreisförmige Umlenkbarriere (6) vorgesehen ist, und
**dass** das Mikrofon (1) oberhalb der Umlenkbarriere (6) angeordnet ist, wobei sich die Schalleintrittsöffnung des Mikrofons (1) auf der den Schalleintrittsöffnungen (4) abgewandten Seite der Umlenkbarriere (6) befindet, und wobei zwischen dem Mikrofon (1) und der Wand der Mikrofonaufnahmekammer (5) eine Gummidichtung (2) angeordnet ist.

2. Mobiltelefon nach Anspruch 1,
**dadurch gekennzeichnet,**
**dass** sich vor dem Mikrofon (1) ein Flies befindet.

3. Mobiltelefon nach Anspruch 1 oder 2,
**dadurch gekennzeichnet,**
**dass** auf der äußeren Umfangsfläche der Gummidichtung (2) umlaufende Dichtlippen (9) angeordent sind.

## Claims

1. Mobile telephone with an embedded microphone, with the sound entry being by means of holes in the housing wall of the mobile telephone,
whereby in addition the sound entry holes (4) in the base area end in an essentially cylindrical microphone housing (5),
**characterised in that**
within the microphone housing (5) a semicircular deflection barrier (6) is provided on the base before the sound entry holes (4), and
the microphone (1) is arranged above the deflection barrier (6) with the sound entry opening of the microphone (1) being located on the side of the deflection barrier (6) away from the sound entry opening (4), and with a rubber seal (2) being fitted between the microphone (1) and the wall of the microphone housing chamber (5).

2. Mobile telephone in accordance with claim 1,
**characterised in that**
a felt is fitted in front of the microphone (1).

3. Mobile telephone in accordance with claim 1 or 2,
**characterised in that**
circumferential sealing lips (9) are arranged on the outer circumferential surface of the rubber seal (2).

## Revendications

1. Téléphone mobile muni d'un microphone encastré, dans lequel l'entrée du son est réalisée au moyen de trous dans la paroi du boîtier du téléphone mobile,
dans lequel, en outre, les trous d'entrée du son (4) se terminent dans la partie de fond d'une chambre d'enregistrement par microphone (5) essentiellement de forme cylindrique,
**caractérisé en ce**
**qu'**une barrière de déviation (6) en forme de demi-cercle est prévue à l'intérieur de la chambre d'enregistrement par microphone (5), sur le fond devant les trous d'entrée du son (4), et
en ce que le microphone (1) est situé au-dessus de la barrière de déviation (6), l'ouverture d'entrée du son du microphone (1) se trouvant du côté de la barrière de déviation (6) détourné des trous d'entrée du son (4), et un joint en caoutchouc (2) étant disposé entre le microphone (1) et la paroi de la chambre d'enregistrement par microphone (5).

2. Téléphone mobile selon la revendication 1,
**caractérisé en ce**
**qu'**un voile se trouve devant le microphone (1).

3. Téléphone mobile selon la revendication 1 ou 2,
**caractérisé en ce**
**que** des lèvres d'étanchéité (9) périphériques sont disposées sur la surface circonférentielle extérieure du joint en caoutchouc (2).
